# DEMANDE DE BREVET EUROPEEN

(11) **EP 1 950 182 A1**
(43) Date de publication de la demande: **30.07.2008**
(21) Numéro de dépôt: 08356013.6
(22) Date de dépôt: 23.01.2008
(51) Int. Cl.: C02F 11/12, C02F 11/14, C02F 1/66, C02F 103/18

(54) **Procédé de filtration de boues contenant des polluants, et procédé d'épuration humide de fumées correspondant**

(30) Priorité: 24.01.2007 FR 0700487
(71) Demandeur: LAB SA, 69006 Lyon (FR)
(72) Inventeur: Siret, Bernard, 69200 Venissieux (FR); Tabaries, Frank, 83190 Ollioules (FR); Woillez, Jacques, 69006 Lyon (FR)
(74) Mandataire: Schouller, Jean-Philippe

(57) **Abrégé**

Selon ce procédé :
- on mélange les boues à filtrer à de l'eau, ainsi qu'à un carbonate peu soluble dans l'eau, ce carbonate étant introduit entre 0,2 et 2% en poids de la quantité totale de boue,
- on admet, sur un filtre (110), notamment un filtre à bande, le mélange ainsi constitué, de manière à former une couche de filtration (21) et une couche de liquide surnageant (22),
- on ajoute, dans une zone amont de ce filtre, un flux liquide acide (30), dont le pH est compris entre 0 et 2, de manière à générer un dégagement gazeux de dioxyde de carbone (CO₂) dans la couche de filtration (21), afin d'augmenter la perméabilité de cette dernière.

## Description

La présente invention concerne un procédé de filtration de boues contenant des polluants, ainsi qu'un procédé d'épuration humide de fumées, qui inclut un tel procédé de filtration.

L'incinération est un moyen communément utilisé pour traiter différents types de déchets comme les ordures ménagères, les boues de station d'épuration ou bien les déchets industriels. Lors de l'incinération, deux types de polluants contaminent les fumées d'incinération. On retrouve d'une part des polluants très volatils, comme l'acide chlorhydrique HCl et le dioxyde de soufre SO₂ et, d'autre part, des polluants moins volatils voire lourds comme les sels et les oxydes métalliques. Des poussières sont également émises et tout ceci doit être traité. Plusieurs types de procédés sont industriellement utilisés pour traiter ces fumées d'incinération.

Il s'agit tout d'abord des procédés secs dans lesquels les polluants sont captés, après adjonction d'un réactif solide, sur un électrofiltre ou un filtre à manches. On retrouve ensuite les procédés semi-secs, dans lesquels une bouillie contenant un réactif comme la chaux est atomisée et évaporée, les résidus solides étant ensuite captés comme dans les procédés secs.

Enfin, on connaît les procédés humides dans lesquels les fumées sont mises en contact avec un liquide de lavage qui capte les polluants. Dans cette dernière approche, le liquide de lavage qui a capté les polluants s'est enrichi avec des composés comme les sulfites, les sulfates, les chlorures, des métaux lourds en solution et des poussières en suspension, et ne peut pas être rejeté à l'environnement sans traitement. Il est donc habituel de mettre en place un traitement d'eau dans lequel on va précipiter, sous forme d'hydroxydes habituellement, les métaux lourds. Après floculation et décantation, ceux-ci constituent une boue qui peut être filtrée afin d'en diminuer la teneur en eau, ce qui forme ainsi un gâteau de filtration que l'on peut évacuer. Pour réaliser cette opération finale, des unités comme des filtres à bande ou des filtres presse sont utilisées.

Par ailleurs, les cendres volantes issues de l'incinération présentent aussi un caractère toxique et plusieurs procédés ont été proposés afin d'en réduire la toxicité, comme la vitrification ou bien le chauffage dans des conditions plus ou moins réductrices. Il a également été proposé, par FR-A-2 696 955, d'utiliser les liquides de lavage des fumées pour laver à leur tour les cendres volantes de manière plus ou moins intégrée. Dans ce cas, les liquides se chargent encore plus en métaux lourds et la quantité de boues générée au traitement d'eau s'accroît encore.

De toute façon, en cas d'utilisation d'un système humide de traitement des fumées on se retrouve avec deux catégories de résidus : les cendres volantes, à hauteur d'environ 20 à 25 kg/tonne d'ordures, ainsi que les gâteaux du traitement d'eau à hauteur d'environ 2 à 3 kg/tonne d'ordure dans le cas des déchets ménagers. Pour éviter d'avoir à gérer deux types de résidus, il a été proposé de laver les cendres et de mélanger le gâteau de filtration aux cendres, avec adjonction éventuelle de réactifs pour réaliser un inertage global.

Malheureusement, alors que les cendres volantes lavées présentent des caractéristiques de filtration convenables, les boues issues d'un traitement d'eau, qui contiennent beaucoup de colloïdes, se prêtent très mal à la filtration. Le simple fait d'ajouter aux cendres volantes lavées les boues d'un traitement d'eau peut dégrader considérablement la filtration, au point de rendre le procédé inopérant.

Ceci étant précisé, l'invention vise à remédier aux différents inconvénients de l'état de la technique évoqués ci-dessus.

A cet effet, elle a pour objet un procédé de filtration de boues contenant des polluants, en particulier des polluants provenant d'un lavage humide de fumées, dans lequel :
- on mélange les boues à filtrer à de l'eau, ainsi qu'à un carbonate peu soluble dans l'eau, ce carbonate étant introduit entre 0,2 et 2% en poids de la quantité totale de boues,
- on admet, sur un filtre, notamment un filtre à bande, le mélange ainsi constitué, de manière à former une couche de filtration et une couche de liquide surnageant,
- on ajoute, dans une zone amont de ce filtre, un flux liquide acide, dont le pH est compris entre 0 et 2, de manière à générer un dégagement gazeux de dioxyde de carbone dans la couche de filtration, afin d'augmenter la perméabilité de cette dernière.

Selon d'autres caractéristiques de l'invention :
- le carbonate peu soluble dans l'eau est du carbonate de calcium ;
- on mélange en outre des cendres volantes aux boues, au carbonate et à l'eau ;
- on ajoute l'eau dans une quantité telle que la teneur en solides du mélange est comprise entre 15 et 40%.

L'invention a également pour objet un procédé d'épuration humide des fumées, dans lequel on lave les fumées à épurer dans un laveur humide, on génère des boues chargées en polluants, et on filtre ces boues selon le procédé ci-dessus, de manière à former un résidu essentiellement solide.

Selon d'autres caractéristiques :
- avant l'étape de lavage humide, on sépare les fumées à épurer de cendres volantes, et on mélange les cendres volantes aux boues à filtrer, au carbonate et à l'eau ;
- le flux liquide acide, ajouté dans la zone amont du filtre, est prélevé à partir de la purge acide générée en aval du laveur humide.

L'invention va être décrite ci-après, en référence aux dessins annexés, donnés uniquement à titre d'exemple non limitatif, dans lesquels :
- la figure 1 est une vue schématique, illustrant une installation d'épuration de fumées permettant la mise en oeuvre d'un procédé conforme à l'invention, et
- la figure 2 est une vue de côté, à plus grande échelle, illustrant la mise en oeuvre d'un procédé de filtration de boues conforme à l'invention.

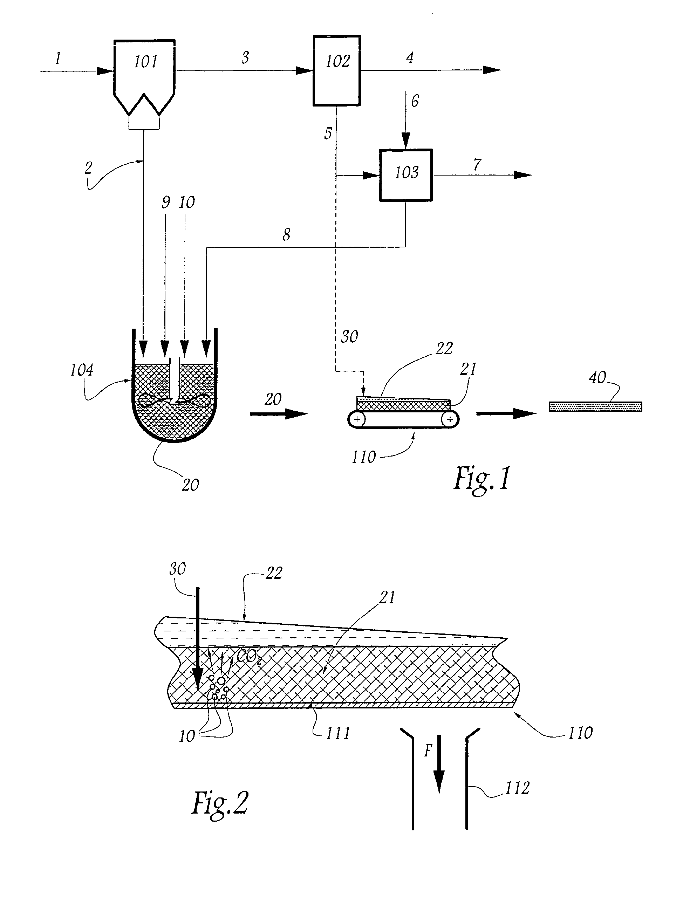

Sur la figure 1, les fumées à épurer 1, qui proviennent par exemple d'un incinérateur non représenté, sont admises dans un séparateur gaz-solides de type connu en soi, par exemple un électrofiltre 101. En aval de cet électrofiltre, on retrouve ainsi des cendres volantes 2, ainsi que des fumées 3 qui sont admises dans un laveur humide 102, également de type connu. En aval de ce dernier, on retrouve des fumées épurées 4, ainsi qu'une purge liquide 5, par exemple de type acide.

Une unité de traitement d'eau 103, de type connu, permet le traitement en particulier de cette purge acide 5, ainsi que d'autres purges non représentées, par exemple au moyen de soude 6. En aval de cette unité de traitement 103, on retrouve ainsi des eaux claires 7, ainsi que des boues 8, qu'il convient de filtrer conformément à l'invention. Les différentes opérations décrites ci-dessus sont de type classique, de sorte qu'elles ont été explicitées de manière succincte dans ce qui précède.

Conformément à l'invention, on admet dans un bac 104 les boues 8, les cendres volantes 2 provenant de l'électrofiltre 101, ainsi que de l'eau 9 que l'on mélange par tout moyen approprié. De plus, on ajoute entre 0,2 et 2% de carbonate 10, qui est en particulier du carbonate de calcium, à la masse globale des boues à filtrer.

On notera que ce carbonate est peu soluble dans l'eau, à savoir que sa solubilité est inférieure à 0.015 g/l dans l'eau pure. Bien évidemment, cette solubilité augmente sensiblement si des acides ou des chlorures sont présents.

Après agitation dans le bac, on obtient un mélange 20 qui est dirigé vers un filtre à bande 110 de type connu en soi, qui est plus précisément illustré sur la figure 2. On notera que le volume de l'eau 9, ajoutée comme décrit précédemment, est tel que la teneur en solides de ce mélange est comprise entre 15 et 40%.

Comme illustré en figure 2, il se forme sur la bande 111 du filtre une couche de filtration 21, ainsi qu'une couche 22 de liquide surnageant. Conformément à l'invention, on ajoute au mélange 20 un flux liquide acide 30, dont le pH est compris entre 0 et 2. De manière avantageuse, ce flux acide est constitué par une partie de la purge acide 5, formée en aval du laveur 102.

Ce flux acide 30 est ajouté dans une proportion comprise entre 0,3 et 2,5 m³, de préférence entre 0,5 et 1,5 m³, par tonne de mélange à filtrer 20, qui comprend lui-même les boues 8, l'eau 9 et le carbonate 10. On notera que ce flux est introduit dans la zone amont du filtre, à savoir qu'il peut être introduit à l'endroit même du filtre où on admet le mélange 20, ou bien immédiatement en aval de ce lieu d'introduction, à une distance très inférieure à la longueur totale du filtre.

Cet acide 30 réagit alors avec le carbonate 10 présent dans la couche de filtration 21, selon la réaction ci-après :

CaCO₃ + 2 H⁺ → CO₂ ↑ + H₂O + Ca⁺⁺

Ceci conduit à la libération de dioxyde de carbone CO₂, sous forme gazeuse. Etant donné que le carbonate 10 est majoritairement présent dans la couche de filtration 21, puisqu'il est peu soluble dans l'eau, le dégagement de gaz se produit essentiellement dans cette couche 21 et non pas dans la couche de liquide 22, ce qui est avantageux.

Ce dégagement de gaz induit une « aération » de la couche de filtration 21, ce qui permet d'en augmenter la perméabilité. Le liquide constitutif de la couche 22 est alors évacué de manière classique, selon la flèche F, par une tubulure 112 équipant le filtre à bande 110.

Par conséquent, au fur et à mesure du transit du mélange 20 sur la bande 111, la hauteur de la couche de liquide surnageant 22 a tendance à diminuer progressivement, en l'occurrence vers la droite sur la figure 2. On récupère donc, en aval du filtre à bande 110, un gâteau de filtration 40 constitué par un mélange de résidus solides qui ont été lavés et qui ont pu être filtrés et déshydratés de manière commode, selon l'opération décrite dans ce qui précède. A cet égard, on notera que cette filtration aurait été beaucoup moins rapide, voire impossible, en l'absence d'ajout du carbonate 10 ou du liquide acide 30.

On notera également que la présence des cendres volantes 2, même si ces dernières servent d'adjuvant de filtration, n'est en général pas suffisante pour assurer une filtration correcte du mélange formé par ces cendres et par les boues, notamment du fait du caractère colloïdal de ces dernières. A cet égard, on notera que, en variante de l'invention, on peut traiter les boues 8 dans le bac sans ajout des cendres volantes 2.

L'invention va être illustrée au moyen de l'exemple de réalisation suivant, donné à titre non limitatif.

Une unité d'incinération d'ordures ménagères produit 600 kg/h de cendres volantes, ainsi que 300 kg/h de boues issues du traitement d'eau. En vue d'obtenir un seul produit stabilisé, on mélange dans un réacteur agité les 600 kg/h de cendres et les 300 kg/h de boues à 1000 kg/h d'eau, alors que 3 kg/h de carbonate de calcium sont ajoutés. Le mélange est introduit par une pompe péristaltique à un filtre à bande et on ajoute, dans la goulotte de distribution du mélange à la bande du filtre, 1.25 m³/h de purges acides d'un laveur à pH 1.2. On réalise alors la filtration, qui serait très délicate, voire impossible, sans ajout du carbonate de calcium ou bien des purges acides.

On notera que, dans l'ensemble de la description et des revendications, les pourcentages des composants sont exprimés en masse.

## Revendications

1. Procédé de filtration de boues (8) contenant des polluants, en particulier des polluants provenant d'un lavage humide de fumées, dans lequel :
- on mélange les boues à filtrer (8) à de l'eau (9), ainsi qu'à un carbonate (10) peu soluble dans l'eau, ce carbonate étant introduit entre 0,2 et 2% en poids de la quantité totale de boues,
- on admet, sur un filtre (110), notamment un filtre à bande, le mélange (20) ainsi constitué, de manière à former une couche de filtration (21) et une couche de liquide surnageant (22),
- on ajoute, dans une zone amont de ce filtre, un flux liquide acide (30), dont le pH est compris entre 0 et 2, de manière à générer un dégagement gazeux de dioxyde de carbone (CO₂) dans la couche de filtration (21), afin d'augmenter la perméabilité de cette dernière.

2. Procédé selon la revendication 1, **caractérisé en ce que** le carbonate peu soluble dans l'eau est du carbonate de calcium.

3. Procédé selon la revendication 1 ou 2, **caractérisé en ce qu'**on mélange en outre des cendres volantes (2) aux boues (8), au carbonate (10) et à l'eau (9).

4. Procédé selon l'une quelconque des revendications précédentes, **caractérisé en ce qu'**on ajoute l'eau (9) dans une quantité telle que la teneur en solides du mélange (20) est comprise entre 15 et 40%.

5. Procédé d'épuration humide de fumées, dans lequel on lave les fumées à épurer (3) dans un laveur humide (102), on génère des boues (8) chargées en polluants, et on filtre ces boues (8) selon le procédé conforme à l'une quelconque des revendications précédentes, de manière à former un résidu essentiellement solide (40).

6. Procédé selon la revendication 5, **caractérisé en ce que**, avant l'étape de lavage humide, on sépare les fumées à épurer (3) de cendres volantes (2), et on mélange les cendres volantes (2) aux boues à filtrer (8), au carbonate (10) et à l'eau (9).

7. Procédé selon la revendication 5 ou 6, **caractérisé en ce que** le flux liquide acide (30), ajouté dans la zone amont du filtre, est prélevé à partir de la purge acide (5) générée en aval du laveur humide (102).
